# EUROPEAN PATENT SPECIFICATION

(11) **EP 0 883 660 B1**
(45) Date of publication and mention of the grant of the patent: **04.12.2002**
(21) Application number: 97905504.3
(22) Date of filing: 03.03.1997
(51) Int. Cl.: C09K 5/00, C09K 5/06

(54) **CALORIFIC OR FRIGORIFIC ELEMENT**
WÄRME- ODER KÜHLELEMENT
ELEMENT THERMIQUEMENT ACTIF

(30) Priority: 01.03.1996 NL 1002506
(43) Date of publication of application: 16.12.1998
(73) Proprietor: TECHNISCHE UNIVERSITEIT DELFT, 2600 AA Delft (NL)
(72) Inventor: VAN TURNHOUT, Jan, NL-2641 CW Pijnacker (NL)
(74) Representative: de Bruijn, Leendert C.
(86) International application number: PCT/NL97/00102
(87) International publication number: WO 97/033950

(56) References cited:
- WO-A-93/11400
- CH-A- 675 963
- FR-A- 2 719 599
- DATABASE WPI Week 8847 Derwent Publications Ltd., London, GB; AN 88-335930 XP002018613 & JP 63 251 489 A (LYOL) , 18 October 1988
- DATABASE WPI Week 8217 Derwent Publications Ltd., London, GB; AN 82-33846E XP002018614 & JP 57 047 339 A (KURARAY) , 18 March 1982
- "Hackh-Chemical Dictionary", 4th edition, McGraw-Hill, 1969, p314

## Description

The invention relates to a device for storing and gradually dispensing heat or cold, comprising a container having an at least partially heat-conducting wall which encloses a space in which a material having a high heat capacity is present.

Such devices are known. A known example is a hot-water bottle, usually a sealable metal or rubber shell which is filled with hot water. Such bottles may leak and therefore carry the risk of scalding by the hot water. Particularly in the case of babies, the sick or the elderly this presents an unacceptable risk.

Safer alternatives to the hot-water bottle have been investigated for some time now. Thus, EP-A-290240 describes an electric heating device which consists of a block containing mineral powder in a polymer matrix and contained therein a heating element and the required electrical leads. In this case there is no risk of leakage, but the limited heat capacity and the high weight form drawbacks.

GB-A-2192118 discloses a bed heater which consists of a flexible container which is made of rubber or an elastomer and which contains a vegetable oil and is provided with electric heating means. The heat capacity of this heater is lower than that of a water bottle, and there is a similar risk of leakage.

US-A-3840985 discloses a water bed heater which consists of two layers of styrene-butadiene rubber with electric heating wires installed in between these. In view of, among other factors, the low heat capacity, such a heater is virtually unsuitable as a heat-chargeable device.

We have now found a device for storing and dispensing heat or cold in accordance with the preamble, which has a high heat capacity and cannot leak. The device according to the invention is characterized in that the material having a high heat capacity comprises a hydrogel formed by a hydrophilic polymer which contains 90-99.5 wt% of water, based on the sum of polymer and water, and that the device has the form of a cylinder, block or plate and the wall encloses the hydrogel, which is in a semisolid state and has essentially the same heat capacity as water.

The device according to the invention is not limited to being used as a substitute for hot-water bottles, but can also be used for the purpose of keeping meals, drinks and other materials and aids warm or cool.

The container of the device may be made of any suitable material. What matters is only that the material will withstand the temperatures at which it is used. Suitable materials are polyamide (PA, nylon), polycarbonate (PC), polyethylene terephthalate (PET), poly(ethylenenaphthalene) (PEN) and poly(oxymethylene) (POM). The container can then be shaped by, for example, blow-moulding, casting or extrusion. The material may also be a heat-resistant rubber or a metal, such as aluminium, stainless steel or chromium copper. It is also possible to use a metal with a plastic coating on top of it. The shape of the container can be that of a cylinder, block or plate. Examples are cylinders, flat, triangular or square blocks, possibly rounded off, discs, or rolls. The container may also have the shape of a bowl or trough, so that materials are able to come into contact with the device on more than one side.

The hydrogel is formed by a hydrophilic polymer which, as a result of hydrogen bond formation, has pronounced water-binding characteristics. The hydrophilic polymer can absorb 90-99.5 wt% of water, based on the sum of polymer and water. The structure of the hydrophilic polymer must be such that the hydrogen bonds remain intact up to a temperature of about 80°C, preferably up to at least 90°C. Optionally, a hydrophilic organic solvent such as an alcohol, acetone, glycol, glycerol or polyglycol may also be present, but preferably less than 20 wt%, in particular less than 5 wt%, of this is present, based on the water.

In particular, the hydrophilic polymer is a polymer or copolymer of (meth)acrylic acid or a salt thereof, alkyl or hydroxyalkyl (meth)acrylate, (meth)acrylamide, vinylpyrrolidone and/or vinyl alcohol, polyethylene glycol or an optionally cross-linked, optionally modified polysaccharide such as starch, cellulose, guar gum, xanthan and other polysaccharides and gums and derivatives thereof such as hydroxyethyl-, hydroxypropyl- or carboxymethyl-cellulose or -starch. Polysaccharides modified with (poly)acrylates are likewise suitable. Preferably, the hydrophilic polymer contains hydroxyalkyl (meth)acrylate units and/or (meth)acrylamide units, where the (meth)acrylamide groups may be N-alkylated or N-hydroxyalkylated. Examples of monomers of which the hydrophilic polymer may be composed are, in particular, hydroxyethyl methacrylate and also hydroxypropyl methacrylate, dihydroxypropyl methacrylate, hydroxyethoxyethyl methacrylate, also ethoxylated analogues thereof, di(hydroxyethyl)aminoethyl methacrylate, methacrylamide, N,N-dimethylmethacrylamide, N-hydroxyethylmethacrylamide, N,N-bis-(hydroxyethyl)methacrylamide, methacrylic acid, methyl methacrylate and the corresponding acrylates and acrylamides, N-vinylpyrrolidone and the like. They may be crosslinked with, for example, 0.1-2 wt% of ethylene dimethacrylate, oxydiethylene dimethacrylate, trimethylolpropane trimethacrylate, N,N-methylenebis-methacrylamide and the like. Also suitable is a crosslinked polymer containing carbamoyl and carboxyl units having the formula >C(CONH₂)-C(COOH)<, which can be obtained by a polymer with maleic anhydride groups such as a vinyl methyl ether/maleic anhydride copolymer crosslinked with C₉H₁₈ chains being treated with ammonia.

The hydrogel is thus always in a semisolid state, so that liquid water cannot leak out even at elevated temperature. At the same time it has virtually the same high heat capacity as water.

To increase the heating-up rate of the device, it may also contain an electrolyte such as an inorganic or organic salt. Some salts have the drawback, however, that they do indeed increase the heating-up rate, but reduce the water absorption capacity of the hydrophilic polymer. It was found that certain salts such as tetraalkylammonium salts and especially lithium salts cause virtually no reduction in the absorption capacity and at the same time markedly increase the heating-up rate. Preferably, a lithium salt such as lithium sulphate, lithium chloride or lithium hydroxide is therefore present in an amount of, for example, 0.1-20 wt% (based on total weight).

The heat capacity of the device can be further increased by the presence of a substance having a high heat of crystallization such as Glauber salt (sodium sulphate decahydrate) or disodium hydrogen phosphate dodecahydrate, in a concentration of from about 10 wt% up to close to the saturation value.

The device according to the invention can be heated up in various ways. The device may, for example, be put into an oven or some other heated space, a timer optionally being used to prevent overheating. Particularly conveniently, heating is effected with the aid of microwaves because these, thanks to the water dipoles, can bring about particularly rapid heating up. The heating-up rate by means of microwaves can be further increased by the presence of polar and/or conductive substances such as carbon black or a water-soluble, organic, conductive polymer. Examples of the latter are, in particular, polypyrrole, polythiophene and polyaniline, but also polyfuran, polyimidazole and polyacetylene, which are provided with hydrophilic groups such as hydroxyalkyl, carboxylate or ammonium groups.

Heating up of the device can advantageously also be carried out electrically, preferably by means of a standard electric heating element. A suitable element is a so-called PTC element (PTC = positive temperature coefficient). Overheating is prevented by such an element as a result of the conductivity decreasing at higher temperature. Optionally, a further thermostat safety device in the form of a bimetal can be employed. The rating of the electric heater obviously primarily depends on the dimensions and the desired capacity of the calorific device. The device may be provided internally with heat-spreading structures such as star- or cross-shaped bulkheads or fins, via which heating can proceed more effectively. The device in this arrangement further has an electrical connection, for example in the form of a plug, which can be uncoupled once heating up has been effected.

Electric heating can also be carried out directly, for example by making use of a structure having heat-resistant fibres which are coated with a conductive polymer and are connected directly to contact electrodes. Coating can be effected, for example, by means of aqueous dispersions of the above-described conductive polymers (polypyrrole and the like). An advantage of this is that many conductive branches run through the hydrogel, which result in uniform heating. After the addition of a conductive polymer to the hydrogel, strip-shaped or rod-shaped electrodes can be fitted which, if required, are locally sheathed with insulation to restrict the passage of current through the gel and prevent local overheating. In this arrangement, again, a thermostat controller is advantageously incorporated, for example in the form of a bimetal. It may also be beneficial to fit a temperature indication in the form of a colour indicator (tape) of a tell-tale lamp, so that a safe maximum temperature is always ensured.

The device according to the invention can be used for the purpose of keeping the human or animal body or parts thereof warm, in the form of a bottle, cylinder, blanket or bed. The device may also serve as a heat source for other materials, such as hair (rollers), food, or plates (catering).

The device according to the invention can be used not only as a chargeable source of heat but also as a source of cold, for example to be used for cooling drinks or other comestibles, or for medical applications. For this purpose use is made of the large heat capacity of the absorbed water and moreover of the latent heat of melting between 0 and -10°C. Cool-down can, for example, be effected in a freezer compartment. The device may have various forms of a cylinder, block or plate and hold varying capacities.

## Claims

1. Device for storing and gradually dispensing heat or cold, comprising a container having an at least partially hcat-conducting wall which encloses a space in which a material having a high heat storage capacity is present, said material having a high heat capacity comprises a hydrogel formed by a crosslinked hydrophilic polymer which contains 90-99.5 wt% of water, based on the sum of polymer and water, ***characterised* in that** the device has the form of a cylinder, block or plate and the wall encloses the hydrogel, which is in a semisolid state and has essentially the same heat capacity as water.

2. Device according to Claim 1, wherein the hydrophilic polymer contains less than 5 wt% of organic solvent, based on the amount of water.

3. Device according to Claim 1 or 2, wherein the hydrophilic polymer is a polymer or copolymer of (meth)acrylic acid or a salt thereof, alkyl or hydroxyalkyl (meth)acrylate or alkyl or hydroxyalkyl (meth)acrylamide, vinylpyrrolidone and/or vinyl alcohol, polyethylene glycol or an optionally modified polysaccharide.

4. Device according to any one of Claims 1-3, wherein an electrolyte, in particular a lithium salt, is also present.

5. Device according to any one of Claims 1-4, wherein a salt having a high heat of crystallization such as Glauber salt is also present.

6. Device according to any one of Claims 1-3, wherein a conductive organic polymer or carbon black is present in the hydrogel.

7. Device according to any one of Claims 1-5, the device additionally comprising means for electric heating.

8. Device according to Claim 7, wherein the heating means comprise an electrical element and a thermostat.

## Patentansprüche

1. Vorrichtung zur Speicherung und allmählichen Abgabe von Wärme oder Kälte, umfassend einen Behälter mit einer mindestens teilweise wärmeleitenden Wandung, welche einen Raum umschließt, in dem sich ein Material mit einer hohen Wärmespeicherkapazität befindet, wobei das Material mit einer hohen Wärmekapazität ein Hydrogel umfaßt, das von einem vernetzten hydrophilen Polymer gebildet wird, welches 90-99,5 Gew.-% Wasser, bezogen auf die Summe von Polymer und Wasser, enthält, **dadurch gekennzeichnet, daß** die Vorrichtung die Form eines Zylinders, eines Blocks oder einer Platte aufweist und die Wandung das Hydrogel umschließt, welches in einem halbfesten Zustand vorliegt und im wesentlichen dieselbe Wärmekapazität wie Wasser hat.

2. Vorrichtung nach Anspruch 1, worin das hydrophile Polymer weniger als 5 Gew.-% organisches Lösungsmittel, bezogen auf die Menge an Wasser, enthält.

3. Vorrichtung nach Anspruch 1 oder 2, worin das hydrophile Polymer ein Polymer oder Copolymer von (Meth)acrylsäure oder einem Salz davon, Alkyl- oder Hydroxyalkyl-(meth)acrylat oder Alkyl- oder Hydroxyalkyl(meth)acrylamid, Vinylpyrrolidon und/oder Vinylalkohol, Polyethylenglycol oder ein gegebenenfalls modifiziertes Polysaccharid ist.

4. Vorrichtung nach irgendeinem der Ansprüche 1-3, worin auch ein Elektrolyt, insbesondere ein Lithiumsalz, vorliegt.

5. Vorrichtung nach irgendeinem der Ansprüche 1-4, worin auch ein Salz mit einer hohen Kristallisationswärme, z.B. Glaubersalz, vorliegt.

6. Vorrichtung nach irgendeinem der Ansprüche 1-3, worin ein leitfähiges organisches Polymer oder Ruß in dem Hydrogel vorliegt.

7. Vorrichtung nach irgendeinem der Ansprüche 1-5, wobei die Vorrichtung zusätzlich Mittel zur elektrischen Beheizung umfaßt.

8. Vorrichtung nach Anspruch 7, worin die Heizmittel ein elektrisches Element und einen Thermostat umfassen.

## Revendications

1. Dispositif pour emmagasiner et distribuer progressivement de la chaleur ou du froid, qui comprend un récipient ayant au moins une paroi partiellement conductrice de la chaleur, qui enferme un espace dans lequel est présent un matériau ayant une grande capacité d'emmagasinement de la chaleur, ledit matériau ayant une grande capacité calorifique comprenant un hydrogel formé par un polymère hydrophile réticulé qui contient 90-99,5 % en poids d'eau par rapport à la somme du polymère et de l'eau, **caractérisé en ce que** le dispositif a la forme d'un cylindre, d'un bloc ou d'une plaque, et que la paroi renferme l'hydrogel, qui est à l'état semi-solide et a essentiellement la même capacité calorifique que l'eau.

2. Dispositif selon la revendication 1, dans lequel le polymère hydrophile contient moins de 5 % en poids d'un solvant organique par rapport à la quantité d'eau.

3. Dispositif selon la revendication 1 ou 2, dans lequel le polymère hydrophile est un polymère ou un copolymère de l'acide (méth)acrylique ou d'un de ses sels, de (méth)acrylate d'alkyle ou d'hydroxyalkyle, ou d'alkyl- ou d'hydroxyalkyl(méth)acrylamide, de vinylpyrrolidone et/ou d'alcool vinylique, un polyéthylèneglycol ou un polysaccharide éventuellement modifié.

4. Dispositif selon l'une quelconque des revendications 1 à 3, dans lequel un électrolyte, en particulier un sel de lithium, est lui aussi présent.

5. Dispositif selon l'une quelconque des revendications 1 à 4, dans lequel un sel ayant une forte chaleur de cristallisation, tel qu'un sel de Glauber, est lui aussi présent.

6. Dispositif selon l'une quelconque des revendications 1 à 3, dans lequel un polymère organique conducteur ou du noir de carbone conducteur est présent dans l'hydrogel.

7. Dispositif selon l'une quelconque des revendications 1 à 5, le dispositif comprenant en outre un moyen de chauffage électrique.

8. Dispositif selon la revendication 7, dans lequel le moyen de chauffage comprend un élément électrique et un thermostat.
